# EUROPEAN PATENT APPLICATION

(11) **EP 2 124 465 A1**
(43) Date of publication of application: **25.11.2009**
(21) Application number: 07850755.5
(22) Date of filing: 18.12.2007
(51) Int. Cl.: H04Q 7/36, H04B 1/707, H04B 7/26

(54) **RADIO COMMUNICATION SYSTEM, RADIO BASE STATION, COMMON PILOT SIGNAL TRANSMISSION CONTROL METHOD AND PROGRAM IN RADIO COMMUNICATION SYSTEM**

(30) Priority: 16.02.2007 JP 2007036413
(71) Applicant: NEC Corporation, Minato-ku Tokyo 108-8001 (JP)
(72) Inventor: SAKAI, Masahito, Tokyo 108-8001 (JP)
(74) Representative: Glawe, Delfs, Moll
(86) International application number: PCT/JP2007/074267
(87) International publication number: WO 2008/099563

(57) **Abstract**

In a wireless communication system that includes wireless base station (101) that transmits a common pilot signal and mobile terminal (102) that receives the common pilot signal transmitted from wireless base station, mobile terminal (102) measures reception quality of the signal transmitted from wireless base station (101) and transmits the measured signal reception quality information to wireless base station (101), and wireless base station (101) determines whether an individual channel or a common control channel is used to transmit the common pilot signal based on the pilot pattern of the common pilot signal, and if the wireless base station determines that the common pilot signal is transmitted by using the individual channel, the wireless base station sets the transmission density of the common pilot signal according to the reception quality of the signal, while if the wireless base station determines that the common pilot signal is transmitted by using the common control channel, the wireless base station sets the transmission density of the common pilot signal such that it is higher than that in the transmission band of the individual channel.

## Description

### Field of the Invention

The present invention relates to a wireless communication system that transmits a common pilot signal, a wireless base station, a method of controlling transmission of a common pilot signal, and a program.

### Description of the prior art

In general, in a wireless communication system, in order to effectively use a radio frequency band, transmission of a common pilot signal using excessive power must be avoided. However, in the related art wireless communication system, in order to enable all the terminals existing within the coverage of a wireless base station to demodulate a common control channel such as broadcast information, the common pilot signal that should be transmitted with strong power has the same transmission density at every transmission band. Hence, the transmission of the common pilot signal with strong power at every transmission band ends in a transmission that uses excessive power.

Thus, a technique that prevents degradation of a CIR, i.e., a signal power-to interference power ratio, in each terminal by adaptively controlling a method of multiplexing a pilot signal in individual channels is discussed (See, for example, Japanese Laid Open Publication 2005-006287).

In addition, a technique that changes the signal density of a pilot signal transmitted from a wireless base station to a mobile terminal according to the cell environment covered by the wireless base station or according to communication quality between the wireless base station and the mobile terminal is also considered (See, for example, Japanese Patent Publication Nos. 2002-522988 and 2006-524966).

However, the technique disclosed in the Japanese Laid Open Publication No. 2005-006287 has a problem in that it needs a channel estimation unit that corresponds to every multiplexing method, thereby affecting the terminal size.

In addition, the techniques disclosed in Japanese Laid Open Publication No. 2005-006287 and in Japanese Patent Publication Nos. 2002-522988 and 2006-524966 do not consider transmission of the common pilot signal in a common control channel.

### SUMMARY OF THE INVENTION

In order to solve the above problems, an object of the present invention is to provide a wireless communication system capable of easily and effectively utilizing a frequency band between a wireless base station and a mobile terminal, a wireless base station, a method of controlling transmission of a common pilot signal in a wireless communication system, and a program.

In order to achieve the object of the present invention, there is provided a wireless communication system including a wireless base station that transmits a common pilot signal and a mobile terminal that receives the common pilot signal transmitted from the wireless base station, wherein the mobile terminal measures the reception quality of the signal transmitted from the wireless base station and transmits the measured reception quality to the wireless base station, and the wireless base station determines whether an individual channel or a common control channel is used to transmit the common pilot signal based on a pilot pattern of the common pilot signal, and if the wireless base station determines that the common pilot signal is transmitted by using the individual channel, the wireless base station sets the transmission density of the common pilot signal according to the reception quality, while if the wireless base station determines that the common pilot signal is transmitted by using the common control channel, the wireless base station sets the transmission density of the common pilot signal such that it is higher than that in a transmission band of the individual channel.

In order to achieve the object of the present invention, there is also provided a wireless base station that transmits a common pilot signal to a mobile terminal, including: a channel determining unit configured to determine whether an -individual channel or a common control channel is used to transmit the common pilot signal based on the pilot pattern of the common pilot signal; and a transmission density controller configured to set the transmission density of the common pilot signal according to the reception quality transmitted from the mobile terminal if the channel determining unit determines that the common pilot signal is transmitted by using an individual channel, and configured to set the transmission density of the common pilot signal such that it is higher than that in the transmission band of the individual channel if the channel determining unit determines that the common pilot signal is transmitted by using the common control channel.

In order to achieve the object of the present invention, there is also provided a method of controlling transmission of a common pilot signal in a wireless communication system including a wireless base station that transmits a common pilot signal and a mobile terminal that receives the common pilot signal transmitted from the wireless base station, the method including: measuring, by the mobile terminal, the reception quality of the signal transmitted from the wireless base station; transmitting, by the mobile terminal, information about the measured reception quality of the signal to the wireless base station; determining, by the wireless base station, whether an individual channel or a common control channel is used to transmit the common pilot signal based on the pilot pattern of the common pilot signal; if the wireless base station determines that the common pilot signal is transmitted by using the individual channel, setting the transmission density of the common pilot signal according to the reception quality; and if the wireless base station determines that the common pilot signal is transmitted by using the common control channel, setting the transmission density of the common pilot signal such that it is higher than that in a transmission band of the individual channel.

In order to achieve the object of the present invention, there is also provided a program that controls the transmission density of a common pilot signal transmitted from a wireless base station to a mobile terminal, the program executing in a computer: determining whether an individual channel or a common control channel is used to transmit the common pilot signal based on the pilot pattern of the common pilot signal; if it is determined that the common pilot signal is to be transmitted by using an individual channel, setting the transmission density of the common pilot signal according to reception quality of the signal transmitted from the mobile terminal; and if it is determined that the common pilot signal is to be transmitted by using the common control channel, setting the transmission density of the common pilot signal such that it is higher than that in a transmission band of the individual channel.

As described above, according to the present invention, the mobile terminal, which receives the common pilot signal transmitted from the wireless base station, measures reception quality of the signal transmitted from the wireless base station and transmits the measured reception quality to the wireless base station. The wireless base station determines whether an individual channel or a common control channel is used to transmit the common pilot signal based on the pilot pattern of the common pilot signal. If the common pilot signal is determined to be transmitted by using the individual channel, the wireless base station sets the transmission density of the common pilot signal according to the reception quality information which has been transmitted from the mobile terminal. If the common pilot signal is determined to be transmitted by using the common control channel, the wireless base station sets the transmission density of the common pilot signal such that it is higher than that in the transmission band of the individual channel. Accordingly, good reception quality can be maintained when the common pilot signal transmitted from the wireless base station is received by the mobile terminal.

### BRIEF DESCRIPTION OF THE DRAWINGS

[FIG. 1] is a schematic block diagram illustrating an exemplary embodiment of a wireless communication system of the present invention;

[FIG. 2] is a flow chart illustrating the process of a method of controlling transmission of a common pilot signal in the wireless communication system of FIG. 1;

[FIG. 3] illustrates an example of a transmission pattern in which the transmission density of a common pilot signal is set to be high in a common control channel transmission band;

[FIG. 4] illustrates another example of a transmission pattern in which the transmission density of a common pilot signal is set to be high in a common control channel transmission band;

[FIG. 5] illustrates an example of a transmission pattern in which the transmission density of a common pilot signal is set to be high in a transmission band other than the common control channel transmission band; and

[FIG. 6] illustrates another example of a transmission pattern in which the transmission density of a common pilot signal is set to be high in a transmission band other than the common control channel transmission band.

### DETAILED DESCRIPTION OF THE PREFERRED EMBODIMENTS

Exemplary embodiments of the invention will be described with reference to the drawings.

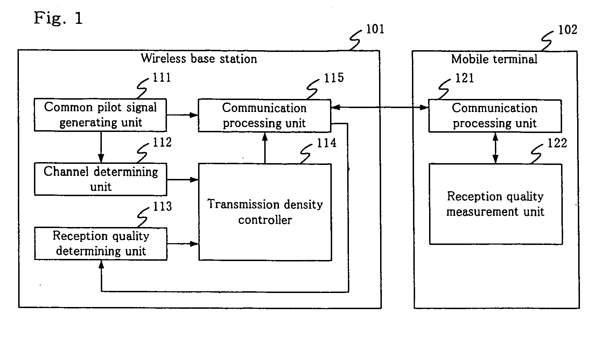

FIG. 1 is a schematic block diagram illustrating an exemplary embodiment of a wireless communication system of the present invention.

As shown in FIG. 1, a wireless communication system according to this exemplary embodiment includes wireless base station 101 and mobile terminal 102 configured to be connectable to wireless base station 101. FIG. 1 illustrates a single mobile terminal connected to wireless base station 101, but the number of mobile terminals is not limited thereto. That is, two or more mobile terminals may be connected to wireless base station 101.

Wireless base station 101 includes common pilot signal generating unit 111, channel determining unit 112, reception quality determining unit 113, transmission density controller 114, and communication processing unit 115. Here, FIG. 1 shows only the elements related to the present invention, from among those constituting wireless base station 101.

Common pilot signal generating unit 111 generates a common pilot signal to be transmitted from wireless base station 101 to mobile terminal 102.

Channel determining unit 112 determines whether a channel used to transmit the common pilot signal generated by common pilot signal generating unit 111 is a common control channel or an individual channel.

Reception quality determining unit 113 determines whether reception quality of mobile terminal 102 is good or not based on reception quality information transmitted from mobile terminal 102.

Transmission density controller 114 sets the transmission density for transmitting the common pilot signal based on the channel determined by the channel determining unit 112 and the result of the reception quality of the signal determined by reception quality determining unit 113.

Communication processing unit 115 transmits the common pilot signal generated by common pilot signal generating unit 111 to mobile terminal 102 at the transmission density set by transmission density controller 114. Also, communication processing unit 115 receives the signal reception quality information transmitted from mobile terminal 102 and outputs the signal reception quality information to reception quality determining unit 113.

Mobile terminal 102 includes communication processing unit 121 and reception quality measurement unit 122. Here, FIG. 1 shows only the elements related to the present invention, from among those constituting mobile terminal 102.

Communication processing unit 121 receives a signal transmitted from wireless base station 101 and outputs the received signal to reception quality measurement unit 122. Also, communication processing unit 121 multiplexes signal reception quality information outputted from reception quality measurement unit 122 to an upstream signal, and transmits the same to wireless base station 101.

Reception quality measurement unit 122 measures reception quality of the signal received from communication processing unit 121.

A method of controlling transmission of a common pilot signal in the wireless communication system as illustrated in FIG. 1 will now be described.

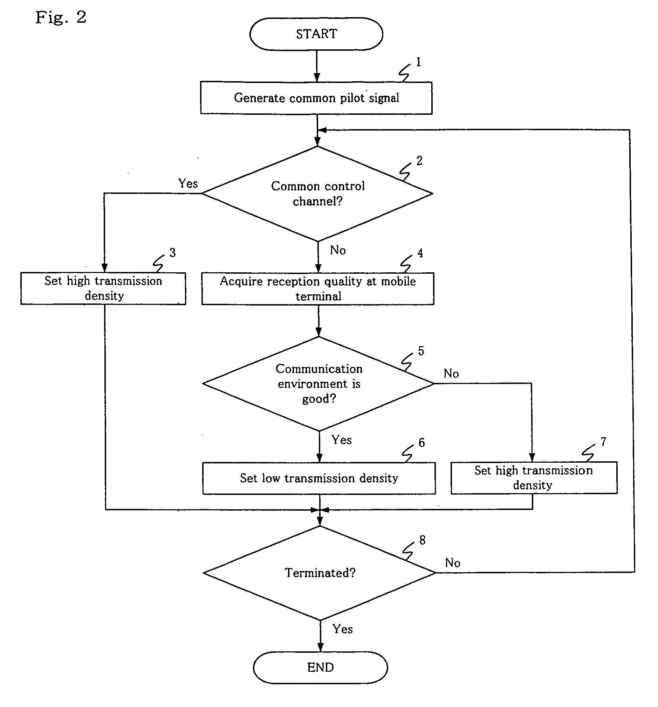

FIG. 2 is a flow chart illustrating the process of a method of controlling transmission of a common pilot signal in the wireless communication system of FIG. 1.

In step 1, a common pilot signal is generated by common pilot signal generating unit 111 of wireless base station 101. The common pilot signal is generated in the same manner as in the related art, and includes a pilot pattern according to a channel used for transmission of the common pilot signal. Here, the channel in use is determined by instructions from an upper device (not shown) connected to wireless base station 101.

When the common pilot signal is generated by common pilot signal generating unit 111, whether or not the channel used for transmission of the common pilot signal is a common control channel is determined by channel determining unit 112 based on the pilot pattern of the generated common pilot signal in step 2.

If the channel used for transmission of the common pilot signal is determined to be the common control channel, the transmission density of the common pilot signal is set to be high by transmission density controller 114 in step 3.

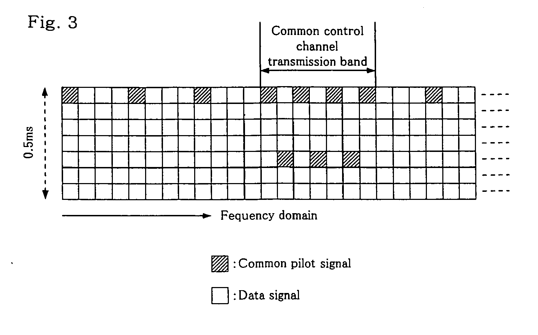

FIG. 3 illustrates an example of a transmission pattern in which the transmission density of a common pilot signal is set high in a common control channel transmission band.

As shown in FIG. 3, among signals transmitted from wireless base station 101, the transmission density of the common pilot signal in the common control channel transmission band is set to be high in a time axis direction and in a frequency axis direction, compared with that of another transmission band, i.e., a transmission band of the individual channel. Here, the transmission density may be set to be high only in the time axis direction or only in the frequency axis direction.

Also, rather than setting the transmission density to be high in the time axis direction or in the frequency axis direction as shown in FIG. 3, the transmission density may be set to be high by controlling the transmission power of the common pilot signal in the common control channel transmission band such that it is high.

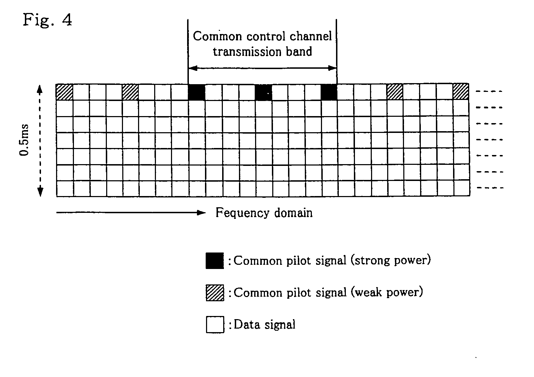

FIG. 4 illustrates another example of a transmission pattern in which the transmission density of a common pilot signal is set to be high in a common control channel transmission band.

As shown in FIG. 4, among signals transmitted from wireless base station 101, transmission power of the common pilot signal in the common control channel transmission band is controlled to be high, compared with that in another transmission band, i.e., a transmission band of the individual channel, thereby setting transmission density of the common pilot signal such that it is high.

If the channel used for transmission of the common pilot signal is the individual channel, not the common control channel, in step 2, signal reception quality information multiplexed in the upstream signal transmitted from mobile terminal 102 is acquired by reception quality determining unit 113 in step 4. This reception quality information is information indicating the result obtained by measuring, by reception quality measurement unit 122 of mobile terminal 102, the reception quality of the downstream signal which has been received by mobile terminal 102 after being transmitted from wireless base station 101. Here, the signal reception quality measured by reception quality measurement unit 122 is the same as that in the related art. For example, the reception quality may be a received signal strength indicator of the downstream signal measured upon receiving it by mobile terminal 102, or may be a propagation delay time measured between wireless base station 101 and mobile terminal 102. Alternatively, the measurement values may be signal reception quality information as it is.

Thereafter, whether or not the acquired reception quality indicated in the signal reception quality information acquired is good is determined by reception quality determining unit 113 in step S5. That is, whether or not a communication environment between wireless base station 101 and mobile terminal 102 is good is determined. In more detail, whether or not the communication environment between wireless base station 101 and mobile terminal 102 is good is determined by comparing the reception quality indicated in the reception quality information and a pre-set threshold value.

For example, if the received signal strength indicator indicated in the signal reception quality information is higher than the pre-set received signal strength indicator threshold value, it is determined that the communication environment between wireless base station 101 and mobile terminal 102 is good. If the received signal strength indicator indicated in the signal reception quality information is not higher than the pre-set received signal strength indicator threshold value, it is determined that the communication environment between wireless base station 101 and mobile terminal 102 is not good. If the propagation delay time indicated in the reception quality information is shorter than a pre-set propagation delay time threshold value, it is determined that the communication environment between wireless base station 101 and mobile terminal 102 is good. Meanwhile, if the propagation delay time indicated in the signal reception quality information is not shorter than a pre-set propagation delay time threshold value, it is determined that the communication environment between wireless base station 101 and mobile terminal 102 is not good.

When the communication environment is determined to be good, the transmission density of the common pilot signal, from among signals transmitted from wireless base station 101, is set to be low, compared with other signals, in step 6. In this case, as described above in step 3, the transmission density of the common pilot signal may be set to be low in both the time axis direction and the frequency axis direction, may be set to be low only in the time axis direction, or may be set to be low only in the frequency axis direction.

Meanwhile, if the communication environment is determined to be not good, the transmission density of the common pilot signal, from among signals transmitted from wireless base station 101, is set to be high, compared with other signals, in step 7. In this case, as described above in step 3, the transmission density of the common pilot signal may be set to be low in both the time axis direction and the frequency axis direction, may be set to be high only in the time axis direction, or may be set to be high only in the frequency axis direction.

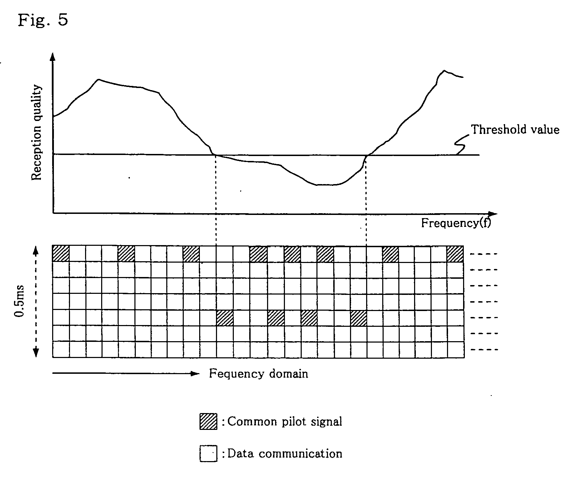

FIG. 5 illustrates an example of a transmission pattern in which the transmission density of a common pilot signal is set to be high in a transmission band other than in the common control channel transmission band.

As shown in FIG. 5, if signal reception quality in the transmission band of the individual channel, other than the transmission band of the common control channel, is better than a pre-set threshold value, the transmission density is set to be low, and if the reception quality is worse than the pre-set threshold value, the transmission density is set to be high in both the time axis direction and the frequency axis direction.

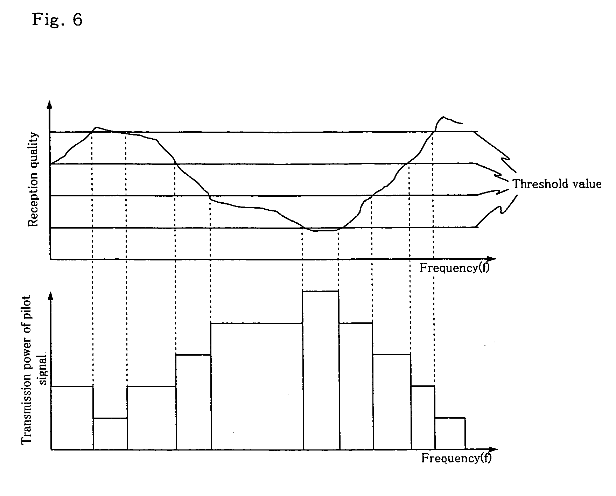

FIG. 6 illustrates another example of a transmission pattern in which the transmission density of a common pilot signal is set to be high in a transmission band other than in the common control channel transmission band.

As shown in FIG. 6, a plurality of threshold values may be previously set in the transmission band other than the common control channel transmission band, i.e., the individual channel transmission band. The transmission density of the common pilot signal may be set by controlling transmission power of the common pilot signal based on the result obtained by comparing the threshold values and reception quality.

Thereafter, whether or not there is yet a common pilot signal is determined in step 8, and if there is no more common pilot signal to be transmitted, the processing is terminated.

As described above, by increasing the transmission density of the common pilot signal at the common control channel transmission band allocated to the mobile terminal before broadcast information is received, a mobile terminal existing at the edge of a cell covered by wireless base station 101, as well as a mobile terminal near wireless base station 101, can reliably receive the broadcast information. As a result, the cell radius covered by wireless base station 101 can be expanded.

In addition, by dynamically controlling the transmission density of the common pilot signal of the band at which the individual channel is allocated to the mobile terminal after receiving the broadcast information, according to the reception quality, excessive transmission of the common pilot signal can be restrained. Moreover, good reception characteristics of the mobile terminal can be maintained.

The present invention can be applicable to communications of mobile phones using a long term evolution (LTE), and it can also be applicable to a wireless communication system in which a single wireless base station and a plurality of terminals such as mobile phones using frequency division multiplexing (FDM) or orthogonal FDM (OFDM) or a wireless LAN communicate with each other.

Also, in the present invention, the processing within the wireless base station 101 may be performed such that a program that can realize the function is recorded in a recording medium and the program can be read by the controller of wireless base station 101 so as to be executed, as well as realized by the above-described dedicated hardware. The recording medium that can be read by the wireless base station 101 may include portable recording media such as floppy disk (registered trademark), optical magnetic disks, DVDs, CDs, or an HDD installed in wireless base station 101. The program recorded in the recording medium may be read by a controller (not shown) of wireless base station 101 and processed under the control of controller in the same manner as described above. Here, the controller of wireless base station 101 operates as a computer that executes the program read from the recording medium having the program recorded thereon.

Also, as discussed above, in the wireless communication system according to an exemplary embodiment of the present invention, if the wireless base station determines that the common pilot signal is transmitted by using an individual channel, it may set the transmission density of the common pilot signal in the frequency axis direction according to the reception quality, and if the wireless base station determines that the common pilot signal is transmitted by using a common control channel, it may set the transmission density of the common pilot signal such that it is higher than that in the transmission band of an individual channel in the frequency axis direction.

In addition, if the wireless base station determines that the common pilot signal is transmitted by using an individual channel, it may set the transmission density of the common pilot signal in the time axis direction according to the reception quality, and if the wireless base station determines that the common pilot signal is transmitted by using a common control channel, it may set the transmission density of the common pilot signal such that it is higher than that in the transmission band of an individual channel in the time axis direction.

Moreover, the wireless base station may set the transmission density by controlling the transmission power for transmitting the common pilot signal.

Also, as discussed above, in the wireless base station according to an exemplary embodiment of the present invention, if the channel determining unit determines that the common pilot signal is transmitted by using an individual channel, the transmission density controller may set the transmission density of the common pilot signal in the frequency axis direction according to the reception quality, and if the channel determining unit determines that the common pilot signal is transmitted by using a common control channel, the transmission density controller may set the transmission density of the common pilot signal such that it is higher than that in the transmission band of an individual channel in the frequency axis direction.

In addition, if the channel determining unit determines that the common pilot signal is transmitted by using an individual channel, the transmission density controller may set the transmission density of the common pilot signal in the time axis direction according to the reception quality, and if the channel determining unit determines that the common pilot signal is transmitted by using a common control channel, the transmission density controller may set the transmission density of the common pilot signal such that it is higher than that in the transmission band of an individual channel in the time axis direction.

Moreover, the transmission density controller may set the transmission density by controlling the transmission power for transmitting the common pilot signal.

Also, as discussed above, the method for controlling the transmission of a common pilot signal according to an exemplary embodiment of the present invention may include: if the wireless base station determines that the common pilot signal is transmitted by using an individual channel, setting the transmission density of the common pilot signal in the frequency axis direction according to the reception quality, and if the wireless base station determines that the common pilot signal is transmitted by using a common control channel, setting the transmission density of the common pilot signal such that it is higher than that in the transmission band of an individual channel in the frequency axis direction.

In addition, the method for controlling transmission of a common pilot signal may include: if the wireless base station determines that the common pilot signal is transmitted by using an individual channel, setting the transmission density of the common pilot signal in the time axis direction according to the reception quality, and if the wireless base station determines that the common pilot signal is transmitted by using a common control channel, setting the transmission density of the common pilot signal such that it is higher than that in the transmission band of an individual channel in the time axis direction.

Also, the method for controlling transmission of a common pilot signal may include controlling, by the wireless base station, transmission power for transmission of the common pilot signal to set the transmission density.

Also, as discussed above, the program according to an exemplary embodiment of the present invention may execute, in a computer, setting the transmission density of the common pilot signal in the frequency axis direction according to the reception quality of the signal if it is determined that the common pilot signal is transmitted by using an individual channel, and setting the transmission density of the common pilot signal such that it is higher than that in the transmission band of an individual channel in the frequency axis direction if it is determined that the common pilot signal is transmitted by using a common control channel.

In addition, the program may execute, in a computer, setting the transmission density of the common pilot signal in the time axis direction according to the reception quality of the signal if the wireless base station determines that the common pilot signal is transmitted by using an individual channel, and setting the transmission density of the common pilot signal such that it is higher than that in the transmission band of an individual channel in the time axis direction if the wireless base station determines that the common pilot signal is transmitted by using a common control channel.

Also, the program may execute, in a computer, setting of the transmission density by controlling transmission power for transmission of the common pilot signal.

While the invention has been shown and described with reference to the exemplary embodiments and examples, it will be understood by those skilled in the art that the invention is not limited thereto and that various changes may be made thereto without departing from the spirit and scope of the invention as defined by the following claims.

This application claims the priority of Japanese Patent Application No. 2007-036413 filed on February 16, 2007, the disclosures of which are incorporated herein by reference.

## Claims

1. A wireless communication system comprising a wireless base station that transmits a common pilot signal and a mobile terminal that receives the common pilot signal transmitted from the wireless base station,
wherein the mobile terminal measures reception quality of the signal transmitted from the wireless base station and transmits the measured reception quality to the wireless base station, and
the wireless base station determines whether an individual channel or a common control channel is used to transmit the common pilot signal based on a pilot pattern of the common pilot signal, and if the wireless base station determines that the common pilot signal is transmitted by using the individual channel, the wireless base station sets a transmission density of the common pilot signal according to the reception quality, while if the wireless base station determines that the common pilot signal is transmitted by using the common control channel, the wireless base station sets the transmission density of the common pilot signal such that it is higher than that in a transmission band of the individual channel.

2. The wireless communication system of claim 1, wherein if the wireless base station determines that the common pilot signal is transmitted by using the individual channel, the wireless base station sets a transmission density of the common pilot signal in a frequency axis direction according to the reception quality, while if the wireless base station determines that the common pilot signal is transmitted by using the common control channel, the wireless base station sets the transmission density of the common pilot signal such that it is higher than that in a transmission band of the individual channel in the frequency axis direction.

3. The wireless communication system of claim 1 or 2, wherein if the wireless base station determines that the common pilot signal is transmitted by using the individual channel, the wireless base station sets a transmission density of the common pilot signal in a time axis direction according to the reception quality, while if the wireless base station determines that the common pilot signal is transmitted by using the common control channel, the wireless base station sets the transmission density of the common pilot signal such that it is higher than that in a transmission band of the individual channel in the time axis direction.

4. The wireless communication system of any one of claims 1 to 3, wherein the wireless base station sets the transmission density by controlling transmission power for transmission of the common pilot signal.

5. A wireless base station that transmits a common pilot signal to a mobile terminal, the wireless base station comprising:
a channel determining unit configured to determine whether an individual channel or a common control channel is used to transmit the common pilot signal based on a pilot pattern of the common pilot signal; and
a transmission density controller configured to set a transmission density of the common pilot signal according to reception quality information transmitted from the mobile terminal if the channel determining unit determines that the common pilot signal is transmitted by using the individual channel, and configured to set the transmission density of the common pilot signal such that it is higher than that in a transmission band of the individual channel if the channel determining unit determines that the common pilot signal is transmitted by using the common control channel.

6. The wireless base station of claim 5, wherein if the channel determining unit determines that the common pilot signal is transmitted by using the individual channel, the transmission density controller sets the transmission density of the common pilot signal in a frequency axis direction according to the reception quality information, and if the channel determining unit determines that that the common pilot signal is transmitted by using the common control channel, the transmission density controller sets the transmission density of the common pilot signal such that it is higher than that in a transmission band of the individual channel in the frequency axis direction.

7. The wireless base station of claim 5 or 6, wherein if the channel determining unit determines that the common pilot signal is transmitted by using the individual channel, the transmission density controller sets the transmission density of the common pilot signal in a time axis direction according to the reception quality information, and if the channel determining unit determines that that the common pilot signal is transmitted by using the common control channel, the transmission density controller sets the transmission density of the common pilot signal such that it is higher than that in a transmission band of the individual channel in the time axis direction.

8. The wireless base station of any one of claims 5 to 7, wherein the transmission density controller sets the transmission density by controlling transmission power for transmission of the common pilot signal.

9. A method of controlling transmission of a common pilot signal in a wireless communication system including a wireless base station that transmits a common pilot signal and a mobile terminal that receives the common pilot signal transmitted from the wireless base station, the method comprising:
measuring, by the mobile terminal, reception quality of the signal transmitted from the wireless base station;
transmitting, by the mobile terminal, the measured reception quality information to the wireless base station;
determining, by the wireless base station, whether an individual channel or a common control channel is used to transmit the common pilot signal based on a pilot pattern of the common pilot signal;
if the wireless base station determines that common pilot signal is transmitted by using the individual channel, setting a transmission density of the common pilot signal according to the reception quality; and
if the wireless base station determines that the common pilot signal is transmitted by using the common control channel, setting the transmission density of the common pilot signal such that it is higher than that in a transmission band of the individual channel.

10. The method of claim 9, further comprising:
if the wireless base station determines that the common pilot signal is transmitted by using the individual channel, setting a transmission density of the common pilot signal in a frequency axis direction according to the reception quality; and
if the wireless base station determines that the common pilot signal is transmitted by using the common control channel, setting the transmission density of the common pilot signal such that it is higher than that in a transmission band of the individual channel in the frequency axis direction.

11. The method of claim 9 or 10, further comprising:
if the wireless base station determines that the common pilot signal is transmitted by using the individual channel, setting a transmission density of the common pilot signal in a time axis direction according to the reception quality; and
if the wireless base station determines that the common pilot signal is transmitted by using the common control channel, setting the transmission density of the common pilot signal such that it is higher than that in a transmission band of the individual channel in the time axis direction.

12. The method of any one of claims 9 to 11, further comprising:
setting, by the wireless base station, the transmission density by controlling transmission power for transmission of the common pilot signal.

13. A program that controls a transmission density of a common pilot signal transmitted from a wireless base station to a mobile terminal, the program executing in a computer:
determining whether an individual channel or a common control channel is used to transmit the common pilot signal based on a pilot pattern of the common pilot signal;
if it is determined that the common pilot signal is transmitted by using the individual channel, setting a transmission density of the common pilot signal according to reception quality transmitted from the mobile terminal; and
if it is determined that the common pilot signal is transmitted by using the common control channel, setting the transmission density of the common pilot signal such that it is higher than that in a transmission band of the individual channel.

14. The program of claim 13, further executing in the computer:
if it is determined that the common pilot signal is transmitted by using the individual channel, setting a transmission density of the common pilot signal in a frequency axis direction according to the reception quality; and
if it is determined that the common pilot signal is transmitted by using the common control channel, setting the transmission density of the common pilot signal such that it is higher than that in a transmission band of the individual channel in the frequency axis direction.

15. The program of claim 13 or 14, further executing in the computer:
if it is determined that the common pilot signal is transmitted by using the individual channel, setting a transmission density of the common pilot signal in a time axis direction according to the reception quality; and
if it is determined that the common pilot signal is transmitted by using the common control channel, setting the transmission density of the common pilot signal such that it is higher than that in a transmission band of the individual channel in the time axis direction.

16. The program of any one of claims 13 to 15, further executing in the computer:
setting the transmission density by controlling transmission power for transmission of the common pilot signal.
